# EUROPEAN PATENT SPECIFICATION

(11) **EP 1 708 451 B1**
(45) Date of publication and mention of the grant of the patent: **19.05.2010**
(21) Application number: 06005174.5
(22) Date of filing: 14.03.2006
(51) Int. Cl.: H04L 29/08

(54) **Apparatus and method for data relay**
Verfahren und Vorrichtung zur Weiterleitung von Daten
Procédé et dispositif pour le relais de données

(30) Priority: 30.03.2005 JP 2005098131
(43) Date of publication of application: 04.10.2006
(73) Proprietor: Toshiba TEC Kabushiki Kaisha, Tokyo 141-8664 (JP)
(72) Inventor: Kato, Hiroto c/o Intellectual Property Division, Shinagawa-ku Tokyo 141-8664 (JP)
(74) Representative: Kramer - Barske - Schmidtchen

(56) References cited:
- US-A1- 2002 161 928
- US-B1- 6 453 361
- US-B1- 6 615 234

## Description

This invention relates to an apparatus which relays data from a data processing apparatus to another data processing apparatus.

In Jpn. Pat. Appln. KOKAI Publication No. 2000-149148, a data relay apparatus which transfers data between a plurality of store-side computers provided in a plurality of stores which are managed by one company and one or a plurality of head office-side computers managed by the company is disclosed.

By using the above data relay apparatus, a difference in the formats of various data items transmitted from the store-side computers to the head office-side computer and various data items transmitted from the head office-side computer to the store-side computers can be compensated for. Therefore, problems in data transfer can be solved.

In recent years, it is considered to commonly use the above data relay apparatus by a plurality of companies. That is, a plurality of store-side computers provided in a plurality of stores which belong to a plurality of companies and head office-side computers provided in the head offices of the respective companies are connected via one data relay apparatus. Data transfer from the store-side computer of one of the stores to the head office-side computer of the company to which the above store belongs is relayed or data transfer from the head office-side computer of one of the companies to the store-side computer of each of the stores belonging to the above company is relayed. By realizing the above data relay technique, the cost of the data relay apparatus can be reduced and maintenance thereof can be simplified.

The format of data transferred from the store-side computer to the head office-side computer, for example, the format of sales data items for respective article codes depends on the maker of the store-side computer. Likewise, the format of data transferred from the head office-side computer to the store-side computer, for example, the format of article master maintenance data also depends on the maker of the head office-side computer.

Therefore, when a plurality of companies utilizing computers of different makers commonly use one data relay apparatus, it is necessary to install a plurality of data conversion tasks corresponding to the data formats of the respective makers on the data relay apparatus.

However, it is necessary to get detailed information on the specification of the data relay apparatus in order to form data conversion tasks. Further, it is also required to get the know-how of the program. Therefore, there occurs a problem that engineers are limited in the making of the data relay apparatus and it is impossible to rapidly cope with the requirements of the companies which want to commonly use the data relay apparatus.

US 6 615 234 discloses a data relay apparatus according to the preamble of claim 1.

A data relay apparatus overcoming the above problems is provided by the present invention as defined in claim 1. Further advantageous embodiments are defined in the sub-claims.

The invention can be more fully understood from the following detailed description when taken in conjunction with the accompanying drawings, in which:
FIG. 1 is a configuration diagram showing a data relay system according to one embodiment of this invention;
FIG. 2 is a block diagram showing the function configuration of a relay server in the above embodiment;
FIG. 3 is a schematic diagram showing the data structure of a conversion process part provided in the relay server in the above embodiment;
FIG. 4 is a schematic diagram showing the data structure of a process determination table provided in the relay server in the above embodiment; and
FIG. 5 is a flowchart for illustrating the main portion of a data processing procedure of a data conversion processing section provided in the relay server in the above embodiment.

There will now be described a preferred embodiment of this invention with reference to the accompanying drawings.

This embodiment shows a case wherein one data relay apparatus is commonly used by two companies which each manage two stores.

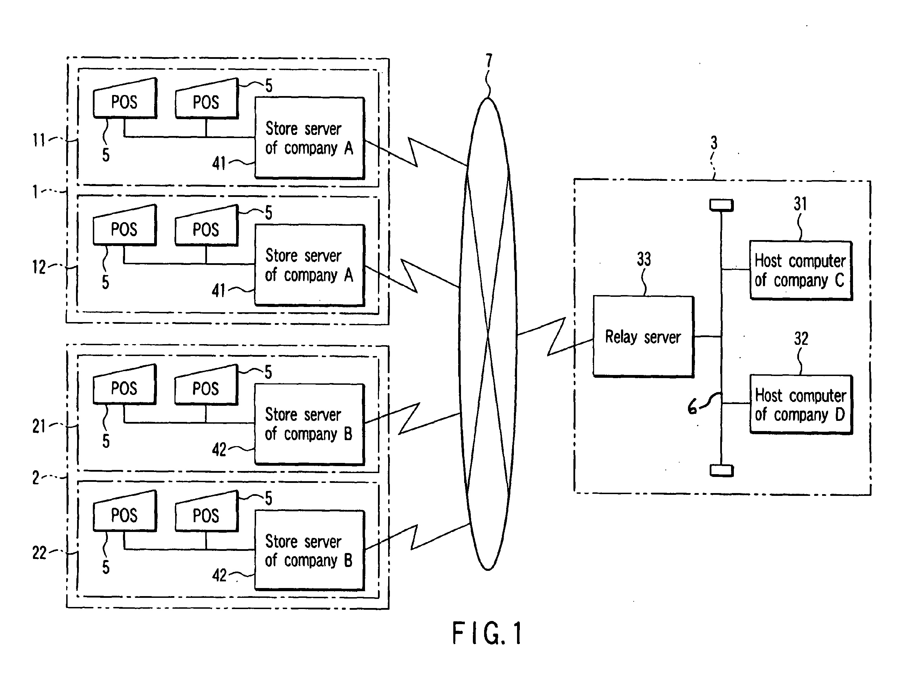

FIG. 1 is a configuration diagram showing a data relay system according to the present embodiment. The system includes first and second companies 1, 2 and a management center 3. The first company 1 includes stores 11, 12 and the second company 2 includes stores 21, 22.

In the stores 11, 12 of the first company 1, store servers 41 made by a maker A are provided as store-side computers. In the stores 21, 22 of the second company 2, store servers 42 made by a maker B are provided as store-side computers.

A plurality of POS terminals 5 which perform the registering process of article sales data or the like are connected to the respective store servers 41, 42 via communication lines. Each of the store servers 41, 42 and the POS terminals 5 connected thereto are combined to configure a POS system. The store server 41 of the maker A and the store server 42 of the maker B utilize independent data formats and are not compatible with each other.

In the management center 3, a host computer 31 made by a maker C is provided as a head office-side computer managed by the first company 1. Further, a host computer 32 made by a maker D is provided as a head office-side computer managed by the second company 2. The host computer 31 made by the maker C and the host computer 32 made by the maker D utilize independent data formats and are not compatible with each other.

In the management center 3, a relay server 33 used as a data relay apparatus according to this invention is further provided. The host computers 31, 32 are connected to the relay server 33 via a local area network (LAN) 6. Further, the store servers 41, 42 of the stores 11, 12, 21, 22 are connected to the relay server 33 via a wide area network (WAN) 7.

In the WAN 7, for example, a file transfer protocol involving Transmission Control Protocol/Internet Protocol (TCP/IP) normally used for the Internet is used.

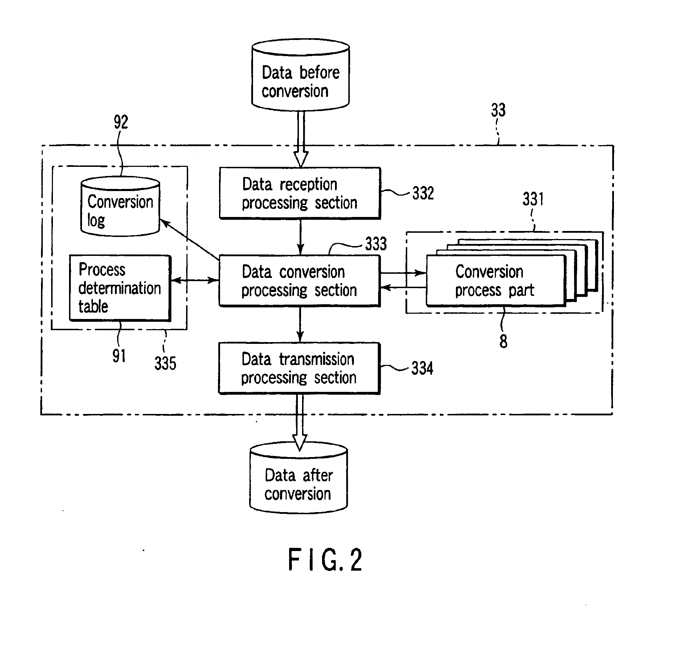

As shown in FIG. 2, the relay server 33 includes a part storage section 331, data reception processing section 332, data conversion processing section 333, data transmission processing section 334 and data storage section 335. In the part storage section 331, a plurality of conversion process parts 8 can be stored. In the data storage section 335, a process determination table 91 and conversion log history file 92 are stored.

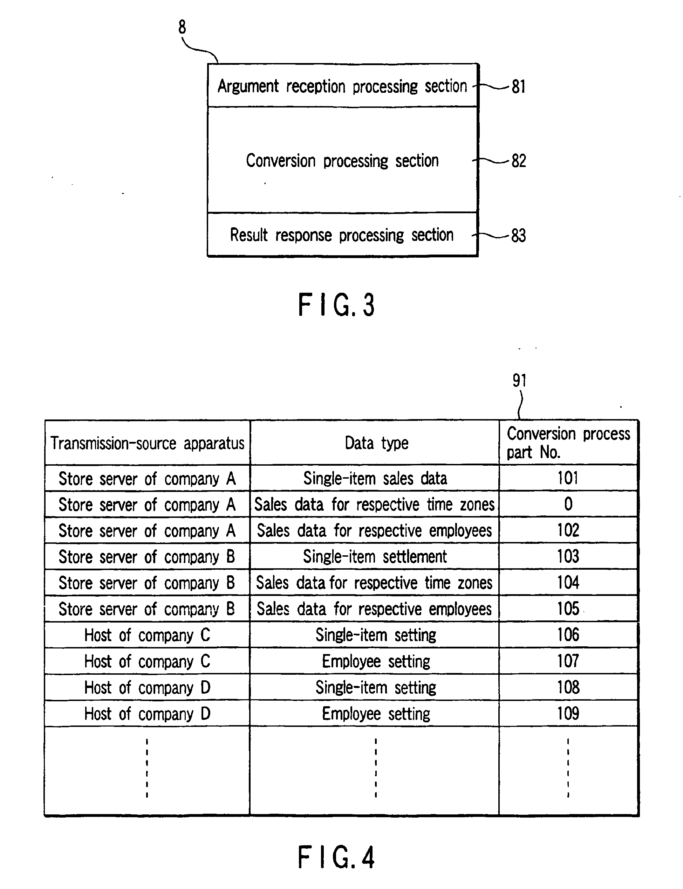

As shown in FIG. 3, the conversion process part 8 is a software part obtained by combining an argument reception processing section 81, conversion processing section 82 and result response processing section 83.

The argument reception processing section 81 is a section to hold an argument transferred from the data conversion processing section 333. As an argument, for example, an input file name, output file name and result response parameter file name of a full path are provided.

The conversion processing section 82 is a section which converts data before conversion received from the first data processing apparatus which is a data transmission source to data which can be processed in the second data processing apparatus which is a transmission destination by use of the argument held in the argument reception processing section 81.

The result response processing section 83 is a section which forms a parameter file to show the data conversion result in the conversion processing section 82. In the parameter file, items of an error code, stage No., error generation source, detail error code and the like are set.

The conversion process parts 8 are formed for the respective types of data items transferred between the store servers 41, 42 and the host computers 31, 32 and held in the part storage section 331. Inherent part numbers are set for the respective conversion process parts 8.

As shown in FIG. 4, in the process determining table 91, identification data which specifies an apparatus used as a data transmission source, identification data which specifies the type of data and a part number of the conversion process part 8 are stored for each type of data transferred between the store servers 41, 42 and the host computers 31, 32.

The data reception processing section 332 receives a data file before conversion from the first data processing apparatus which is a data transmission source and transfers the same to the data conversion processing section 333.

The data transmission processing section 334 transmits a data file converted in the data conversion processing section 333 to the second data processing apparatus used as the data transmission destination.

The data conversion processing section 333 first determines the type of data transferred from the data reception processing section 332. Then, it retrieves the conversion process part 8 provided for the determined type of data from the part storage section 331. Next, an instruction to start the software of the retrieved conversion process part 8 is issued. Finally, the data file converted by use of the conversion process part 8 is transferred to the data transmission processing section 334.

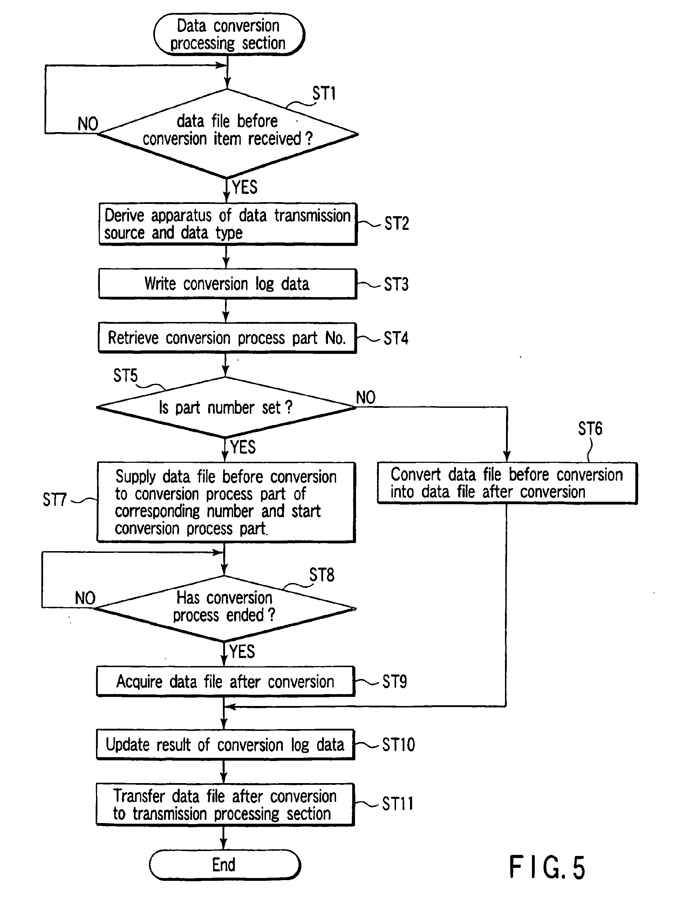

The concrete processing procedure of the data conversion processing section 333 is shown by the flowchart of FIG. 5.

When the data conversion processing section 333 receives a data file before conversion from the data reception processing section 332 in step ST1, it acquires identification data of a data processing apparatus used as a data transmission source and identification data which specifies the type of transmission data from the file name thereof in step ST2.

The data conversion processing section 333 forms conversion log data and writes the same into the conversion log history file 92 in step ST3. The conversion log data is configured by a file name of the data file, identification data of an apparatus which is a data transmission source, identification data which specifies the data type, reception date and time and the like, for example.

The data conversion processing section 333 retrieves the process determination table 91 by use of identification data of an apparatus which is a data transmission source and identification data which specifies the data type in step ST4 and acquires a part number of a conversion process part set in correspondence to the above identification data items.

The data conversion processing section 333 determines the part number of the conversion process part in step ST5. When the part number is "zero", that is, when a part number is not set, the data conversion processing section 333 recognizes that conversion of the data file is unnecessary. In this case, the data conversion processing section 333 deals with the data file before conversion as it is as a data file after conversion in step ST6.

When the conversion process part number is set to a number other than "zero", that is, when a certain part number is set, the data conversion processing section 333 recognizes that conversion of the data file is necessary. In this case, the data conversion processing section 333 supplies a data file before conversion to the conversion process part 8 of the part number acquired from the process determination table 91 in step ST7. Then, an instruction to start the conversion process part 8 is issued.

Thus, the conversion process by the conversion process part 8 is performed and data of the data file is converted to data in a form which can be processed in a data processing apparatus used as a data transmission destination.

The data conversion processing section 333 waits until a parameter file indicating the conversion result is returned from the conversion process part 8 in step ST8. When the parameter file is acquired, the data conversion processing section 333 recognizes that the conversion process by the conversion process part 8 has been ended. Then, it acquires a data file after conversion obtained in the conversion process from the conversion process part 8 in step ST9.

When acquiring the data file after conversion in step ST6 or ST9, the data conversion processing section 333 adds information of a parameter file indicating the conversion result to the conversion log data already written in the conversion log history file 92 in step ST10. Finally, the data conversion processing section 333 transfers the data file after conversion to the data transmission processing section 334 in step ST11.

For example, the part storage section 331 and data storage section 335 can be configured by a nonvolatile storage device such as a hard disk drive (HDD) or the like. The data reception processing section 332, data conversion processing section 333 and data transmission processing section 334 can be configured by an application program as one basis.

Next, the operation of the present embodiment is explained by taking a case wherein a file of single-item sales data is transmitted from the store server 41 to the host computer 31 and a case wherein a file of single-item setting data is transmitted from the host computer 32 to the store server 42 as an example. In this case, it is assumed that data shown in FIG. 4 is stored in the process determination table 91.

A file of single-item sales data transmitted from the store server 41 is supplied to the relay server 33 via the WAN 7. In the relay server 33, the file of single-item sales data is received by the data reception processing section 332. Then, conversion log data is written by the data conversion processing section 333 and a part number "101" of the conversion process part 8 is retrieved. After this, an instruction to start the conversion process by use of the conversion process part 8 specified by the part number "101" is issued. As a result, the single-item sales data is converted into a form which can be processed by the host computer 31 according to a program installed in the conversion process part 8 specified by the part number "101".

When conversion of the single-item sales data is ended, a file having the single-item sales data after conversion stored therein is supplied from the data conversion processing section 333 to the data transmission processing section 334. As a result, the file having the single-item sales data after conversion stored therein is transmitted to the host computer 31 via the LAN 6. Thus, in the host computer 31, the single-item sales data is correctly processed.

The file of the single-item setting data supplied from the host computer 32 is transmitted to the relay server 33 via the LAN 6. In the relay server 33, the single-item setting data is received by the data reception processing section 332. Then, conversion log data is written by the data conversion processing section 333 and a part number "108" of the conversion process part 8 is retrieved. After this, an instruction to start the conversion process by use of the conversion process part 8 specified by the part number "108" is issued. As a result, single-item setting data is converted into a form which can be processed by the store server 42 according to a program installed in the conversion process part 8 specified by the part number "108".

When conversion of the single-item setting data is ended, a file having the single-item setting data after conversion stored therein is supplied from the data conversion processing section 333 to the data transmission processing section 334. As a result, the file in which the single-item setting data after conversion is stored is transmitted to the store servers 42 of the stores 21, 22 via the WAN 7. Thus, in the store server 42, the single-item setting data is correctly processed.

The relay server 33 can perform the conversion processes by a plurality of conversion process parts 8 in a multi-task fashion. The concrete contents of the conversion process is substantially the same as those of the existing conversion process, and therefore, the explanation thereof is omitted here.

Thus, the relay server 33 includes an application program used as a basis. The relay server 33 also includes conversion process parts 8 called and started according to the application program for respective types of transmission data items. The conversion process part 8 can be configured by an argument reception processing section 81 used as an input port thereof, a result response processing section 83 used as an output port thereof and a conversion processing section 82 which is software actually performing data conversion.

When new to-be-converted data is generated, first, a conversion process part 8 corresponding to the data is formed. At this time, it is not necessary to form the software of the conversion process part 8 while paying much attention to the specification of the relay server 33. Then, the thus formed conversion process part 8 is stored in the part storage section 331 of the relay server 33. Finally, identification data which specifies an apparatus used as a data transmission source, identification data which specifies the type of data and a part number which specifies the formed conversion process part are set in the process determination table 91. By performing the above operations, the user can cope with the new to-be-converted data.

Thus, since it is not required to get the detail information on the specification of the relay server 3, for example, a programmer other than the programmers of the maker of the relay server 33 can easily form a desired conversion process part 8. Therefore, it is possible to attain the effect that the requirement of a plurality of companies which utilize computers of makers using different data formats to commonly use one data relay apparatus can be easily and rapidly coped with without converting an application program used as a basis.

In the above embodiment, a case wherein the two companies managing the two stores commonly use one data relay apparatus is explained, but the number of stores and the number of companies are not particularly limited to the above case.

It is explicitly stated that all features disclosed in the description and/or the claims are intended to be disclosed separately and independently from each other for the purpose of original disclosure. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A data relay apparatus (33) comprising:
a part storage section (331) which stores a plurality of conversion process parts (8) corresponding to respective types of data items, and
**characterized by**
a receiving section (332) configured to receive data items transmitted from a first data processing apparatus (31, 32, 41, 42) to a second data processing apparatus (41, 42, 31, 32),
a data storage section (335) storing a process determination table (91) which stores, for each type of data item, identification data specifying a data processing apparatus, identification data specifying a type of data item, and a part number specifying a conversion process part (8),
a determining section (333) configured to acquire, for each data item received by the receiving section (332), identification data specifying a data processing apparatus that transmitted the received data item, and identification data specifying a type of the received data item,
a retrieving section (333) configured to retrieve from the process determination table, using the acquired identification data, a part number of a conversion process part (8) which corresponds to the acquired identification data,
a starting section (333) configured to start the conversion process part (8) specified by the retrieved part number for converting the received data item, and
a transmitting section (334) configured to transmit the converted data item to the second data processing apparatus (41, 42, 31, 32).

2. The data relay apparatus (33) according to claim 1, **characterized by** further comprising a log holding section (92) configured to hold a data conversion result by the conversion process part (8) started by the starting section (333) as log data.

3. The data relay apparatus (33) according to claim 2, **characterized in that** the log data contains at least one of a file name of a transmitted data item received from the first data processing apparatus (31, 32, 41, 42), identification data which specifies the first data processing apparatus (31, 32, 41, 42), identification data which specifies a type of the transmitted data item and reception date and time.

4. The data relay apparatus (33) according to claim 1, **characterized in that** the conversion process part (8) includes an argument reception processing section (81) configured to receive and hold an argument used for data conversion, a conversion processing section (82) configured to convert data by use of the argument held in the argument reception processing section (81), and a result response processing section (83) configured to form a parameter indicating the data conversion result.

5. The data relay apparatus (33) according to claim 1, **characterized in that** when the acquired part number is zero, the transmitting section (334) is configured to transmit the received data item to the second data processing apparatus (41, 42, 31, 32) without conversion.

## Patentansprüche

1. Datenrelaisvorrichtung (33) mit
einem Teilspeicherabschnitt (331), der eine Mehrzahl von Umwandlungsprozessteilen (8), die entsprechenden Typen von Datenelementen entsprechen, speichert, und
**gekennzeichnet durch**
einen Empfangsabschnitt (332), der zum Empfangen von Datenelementen, die von einer ersten Datenverarbeitungsvorrichtung (31, 32, 41, 42) an eine zweiten Datenverarbeitungsvorrichtung (41, 42, 31, 32) übertragen werden, konfiguriert ist,
einen Datenspeicherabschnitt (335) zum Speichern einer Prozessbestimmungstabelle (91), die für jeden Typ von Datenelement Identifikationsdaten, die eine Datenverarbeitungsvorrichtung spezifizieren, Identifikationsdaten, die einen Typ des Datenelements spezifizieren, und eine Teilnummer, die einen Umwandlungsprozessteil (8) spezifiziert, speichert,
einen Bestimmungsabschnitt (333), der dazu konfiguriert ist, für jedes von dem Empfangsabschnitt (332) empfangene Datenelement Identifikationsdaten, die eine Datenverarbeitungsvorrichtung, die das empfangene Datenelement übertragen hat, spezifizieren, und Identifikationsdaten, die einen Typ des empfangenen Datenelements spezifizieren, zu erfassen,
einen Abrufabschnitt (333), der dazu konfiguriert ist, eine Teilnummer des Umwandlungsprozessteils (8), der den erfassten Identifikationsdaten entspricht, aus der Prozessbestimmungstabelle unter Benutzung der erfassten Identifikationsdaten abzurufen,
einen Startabschnitt (333), der dazu konfiguriert ist, den **durch** die abgerufene Teilnummer spezifizierten Umwandlungsprozessteil (8) zum Umwandeln des empfangenen Datenelements zu starten, und
einen Übertragungsabschnitt (334), der zum Übertragen des umgewandelten Datenelements an die zweite Datenverarbeitungsvorrichtung (41, 42, 31, 32) konfiguriert ist.

2. Datenrelaisvorrichtung (33) nach Anspruch 1, ferner mit einem Protokollfesthalteabschnitt (92), der dazu konfiguriert ist, ein Datenumwandlungsergebnis des von dem Startabschnitt (333) gestarteten Umwandlungsprozessteils (8) als Protokolldaten festzuhalten.

3. Datenrelaisvorrichtung (33) nach Anspruch 2, **dadurch gekennzeichnet, dass** die Protokolldaten mindestens eines von einem Dokumentnamen eines gesendeten Datenelements, das von der ersten Datenverarbeitungsvorrichtung (31, 32, 41, 42) empfangen wurde, Identifikationsdaten, die die erste Datenverarbeitungsvorrichtung (31, 32, 41, 42) spezifizieren, Identifikationsdaten, die einen Typ des übertragenen Datenelements spezifizieren, und einem Empfangsdatum und einer Empfangszeit enthalten.

4. Datenrelaisvorrichtung (33) nach Anspruch 1, **dadurch gekennzeichnet, dass** der Umwandlungsprozessteil (8) einen Argumentempfangsverarbeitungsabschnitt (81), der zum Empfangen und Festhalten eines für die Datenumwandlung benutzten Arguments konfiguriert ist, einen Umwandlungsverarbeitungsabschnitt (82), der zum Umwandeln von Daten durch Benutzung des in dem Argumentempfangsverarbeitungsabschnitt (81) festgehaltenen Arguments konfiguriert ist, und einen Ergebnisrückmeldungsverarbeitungsabschnitt (83), der zum Bilden eines das Datenumwandlungsergebnis kennzeichnenden Parameters konfiguriert ist, aufweist.

5. Datenrelaisvorrichtung (33) nach Anspruch 1, **dadurch gekennzeichnet, dass**, wenn die erfasste Teilnummer Null ist, der Übertrageabschnitt (334) dazu konfiguriert ist, das empfangene Datenelement an die zweiten Datenverarbeitungsvorrichtung (41, 42, 31, 32) ohne Umwandlung zu übertragen.

## Revendications

1. Dispositif pour le relais de données (33) comportant :
une section de mémorisation de partie (331) qui mémorise une pluralité de parties de processus de conversion (8) correspondant aux types respectifs d'éléments de données, et
**caractérisé par**
une section de réception (332) configurée pour recevoir des éléments de données transmis depuis un premier appareil de traitement de données (31, 32, 41, 42) à un second appareil de traitement de données (41, 42, 31, 32), une section de mémorisation de données (335) mémorisant une table de détermination de processus (91) qui mémorise, pour chaque type d'élément de données, des données d'identification spécifiant un appareil de traitement de données, des données d'identification spécifiant un type d'élément de données, et un numéro de partie spécifiant une partie de processus de conversion (8),
une section de détermination (333) configurée pour acquérir, pour chaque élément de données reçu par la section de réception (332), des données d'identification spécifiant un appareil de traitement de données qui a transmis les éléments de données reçus, et des données d'identification spécifiant un type d'élément de données reçu,
une section de récupération (333) configurée pour récupérer à partir de la table de détermination de processus, en utilisant les données d'identification acquises, un numéro de partie d'une partie de processus de conversion (8) qui correspond aux données d'identification acquises,
une section de commencement (333) configurée pour débuter la partie de processus de conversion (8) spécifiée par le numéro de partie récupéré pour convertir l'élément de données reçu, et
une section de transmission (334) configurée pour transmettre l'élément de données converti au second appareil de traitement de données (41, 42, 31, 32).

2. Dispositif pour le relais de données (33) selon la revendication 1, **caractérisé en ce qu'**il comporte en outre une section de conservation de journal (92) configurée pour conserver un résultat de conversion de données par la partie de processus de conversion (8) débutée par la section de commencement (333) en tant que données de journal.

3. Dispositif pour le relais de données (33) selon la revendication 2, **caractérisé en ce que** les données de journal contiennent au moins l'un d'un nom de fichier d'un élément de données transmis reçu depuis le premier appareil de traitement de données (31, 32, 41, 42), des données d'identification qui spécifient le premier appareil de traitement de données (31, 32, 41, 42), des données d'identification qui spécifient un type d'élément de données transmis et l'heure et la date de réception.

4. Dispositif pour le relais de données (33) selon la revendication 1, **caractérisé en ce que** la partie de processus de conversion (8) comprend une section de traitement de réception d'argument (81) configurée pour recevoir et conserver un argument utilisé pour une conversion de données, une section de traitement de conversion (82) configurée pour convertir des données en utilisant l'argument conservé dans la section de traitement de réception d'argument (81), et une section de traitement de réponse de résultat (83) configurée pour former un paramètre indiquant le résultat de conversion de données.

5. Dispositif pour le relais de données (33) selon la revendication 1, **caractérisé en ce que**, lorsque le numéro de partie acquise est zéro, la section de transmission (334) est configurée pour transmettre l'élément de données reçu au second appareil de traitement de données (41, 42, 31, 32) sans conversion.
